Europäisches Patentamt

European Patent Office

Office européen des brevets

(11) Publication number: **0 327 129**
**A1**

(12) **EUROPEAN PATENT APPLICATION**

(21) Application number: 89101960.6

(22) Date of filing: 03.02.89

(51) Int. Cl.⁴ **C09D 3/58 , C09D 3/78 ,**
**C09D 5/44**

(30) Priority: 05.02.88 JP 26259/88

(43) Date of publication of application:
09.08.89 Bulletin 89/32

(84) Designated Contracting States:
**DE FR GB IT SE**

(71) Applicant: **Nippon Paint Co., Ltd.**
**2-1-2, Oyodokita Oyodo-ku**
**Osaka-shi Osaka-fu(JP)**

(72) Inventor: **Nishikawa, Shigeo**
**384-2, Ohta Taima-cho**
**Kitakatsuragi-gun Nara-ken(JP)**
Inventor: **Inoue, Tsuyoshi**
**2-1-45, Suimeidai**
**Kawanishi-shi Hyogo-ken(JP)**
Inventor: **Hagihara, Koichi**
**7-9, Kitashouwa-cho**
**Nishinomiya-shi Hyogo-ken(JP)**
Inventor: **Tsuchiya, Yasuyuki**
**3-8-23, Kuzuha Asahi**
**Hirakata-shi Osaka-fu(JP)**

(74) Representative: **Hansen, Bernd, Dr.rer.nat. et**
**al**
**Hoffmann, Eitle & Partner Patentanwälte**
**Arabellastrasse 4 Postfach 81 04 20**
**D-8000 München 81(DE)**

(54) **Aqueous coating composition.**

(57) The present invention provides an aqueous coating composition comprising a basic resin having basic groups in an amount of 20 to 250 mmol based on 100 g of a solid content and a fluorine containing polymer. The present invention also provides a cationic electrocoating technique using the aqueous coating composition, and a coated article obtained therefrom.

EP 0 327 129 A1

## AQUEOUS COATING COMPOSITION

### FIELD OF THE INVENTION

The present invention relates to an aqueous coating composition comprising a basic resin and a fluorine-containing polymer and cathodic electrodeposition technique using the same. The coating composition imparts excellent weathering resistance and corrosion resistance to a coated film.

### BACKGROUND OF THE INVENTION

A fluorine-containing polymer has been known as a polymer which has distinguish properties, such as wearing resistance and the like. In order to impart and distinguish properties to coated film, it has also been proposed that the fluorine-containing polymer is formulated into aqueous paint, particularly aqueous electrocoating paint (see Japanese Kokai Publication (unexamined) 34530/1974, Japanese Kokoku Publication (examined) 28656/1974, Japanese Kokai Publications (unexamined) 87765/1986 and 59676/1987 etc.). These publications only disclose a combination of the fluorine-containing polymer with a water-dispersible resin having acidic groups or no neutralized salt groups, but are silent on a composition of the fluorine-containing polymer with a resin having basic groups.

The conventional aqueous paint, however, provides a coated film which has improved wear resistance due to the presence of the fluorine-containing polymer, but which is poor in both or either weathering resistance nor corrosion resistance. Accordingly, it is desired that an aqueous paint, especially for electrocoating, when coated and cured provieds with not only wearing resistance, but also both weathering resistance and corrosion resistance.

### SUMMARY OF THE INVENTION

The present invention provides an aqueous coating composition comprising a basic resin having basic groups in an amount of 20 to 250 mmol based on 100 g of a solid content and a fluorine containing polymer.

The present invention also provides cationic electrocoating technique using the aqueous coating composition, and a coated article obtained therefrom.

### DETAILED DESCRIPTION OF THE INVENTION

The basic resin is composed of a resin backbone and basic groups attached thereto. The basic groups of the present invention are generally selected from the group consisting of amino groups, quaternary ammonium groups, sulfonium groups, quaternary phosphonium groups, Mannich groups, iminoamine groups, oxazoline rings and the like. The basic groups are present in the basic resin in an amount of 20 to 250 mmol based on 100 g of the solid content, preferably 50 to 150 mmol based on 100 g of the solid content. Amounts of less than 20 mmol/100 g solid content are poor in water solubility or water dispersibility. Even if the resin became water dispersible, a dispersion obtained therefrom would become unstable. Amounts of more than 250 mmol/100 g solid content deteriorate film properties, such as weathering resistance and corrosion resistance.

The resin backbone for the basic resin is not specifically limited, but generally includes epoxy resin, acryl resin, polybutadiene resin and the like.

When the resin backbone is epoxy resin, the basic resin may be prepared by reacting secondary amines with epoxy resins known to the art. Typical examples of the secondary amines are diethylamine, dibutylamine, diethanolamine, N-methylethanolamine, ketimine-blocked secondary amines and the like. The basic resin may also be prepared by reacting the epoxy resins with tertiary amines or phosphines in the presence of acid to form quaternary onium base groups on the epoxy backbone. Mannich base groups can also be introduced into the epoxy backbone. The base groups are not limited to one type, they can be a combination of some types.

When the resin backbone is acrylic resin, the basic resin may be prepared by copolymerizing (meth)-acrylic ester monomers and amino group-containing ethylenically unsaturated monomers, and optionally the other ethylenically unsaturated monomers. Typical examples of the (meth)acrylic monomers are methyl (meth)acrylate, ethyl (meth)acrylate, isopropyl (meth)acrylate, n-butyl (meth)acrylate, 2-ethylhexyl (meth)-acrylate, n-hexyl (meth)acrylate, hydroxypropyl (meth)acrylate and the like. Typical examples of the amino group-containing ethylenically unsaturated monomers are dimethylaminoethyl (meth)acrylate, vinyl imidazole and the like. Examples of the other ethylenically unsaturated monomers are styrene, vinyl toluene, vinyl acetate, acrylonitrile and the like. The basic resin can also be prepared by copolymerizing the (meth)acrylic ester monomers with glycidyl group-containing monomers, such as glycidyl (meth)acrylate etc., followed by adding secondary amines or ketimine blocked secondary amines thereto. Onium groups can also be introduced to acrylic resins.

When the resin backbone is polybutadiene, the basic resin can be prepared by the following four methods: (1) Maleic anhydride is added to polybutadienes to form maleic polybutdienes, which are then reacted with diamines to obtain iminoamines. (2) The maleic polybutadienes are reacted with water or alcohols to obtain polycarboxyl resins which are then reacted with alkanolamines to form oxazoline rings. (3) Polybutadienes are converted to epoxidized polybutadienes by using peroxides, such as peracetate etc. and reacted with primary or secondary amines. (4) The epoxidized polybutadienes are reacted with tertiary amines in the presence of acids to form quaternary ammonium groups.

The basic resin is neutralized with acids to make them water soluble or water dispersible. Typical examples of the acids for the neutralization are formic acid, acetic acid, lactic acid and the like. The acids may generally be employed in such an amount that a neutralization rate is in the range of 10 to 150 %, preferably 20 to 100 % based on the total amount of the basic groups. If the neutralization rate is less than 10 %, the resin is poor in water solubility or water dispersibility. If it is more than 150%, paint obtained therefrom has lower pH which corrodes coating facilities and the coated film has poor appearance.

The fluorine-containing polymer employed in the present invention generally includes acrylic fluorine resin, polyfluorinated vinyl resin, polyfluorinated vinylidene resin, fluorocarbon resin, polytetrafluoroethylene resin and the like. For obtaining uniform and smooth surface, it is preferred that the fluorine-containing polymer has a melting point of not more than 200 °C. In case where the polymer is employed in the form of powder, an average particle size of the particles is not more than 5 $\mu$, so that the obtained coating composition is more stable and provides good coating appearance.

An amount of the fluorine-containing polymer is 2 to 900 parts by weight, preferably 11 to 150 parts by weight based on 100 parts of the basic resin. Amounts of more than 900 parts by weight deteriorate the stability of the composition and coating appearance. Amounts of less than 1 parts by weight does not provide good film properties such as weathering resistance, corrosion resistance and wearing resistance.

The aqueous coating composition of the present invention may contain a crosslinking agent, such as aminoplasts, blocked isocyanates, a mixture thereof and the like. Typical examples of the aminoplasts are a condensate of a nitrogen-containing organic compound, such as melamine, urea, benzoguanamine and the like with formaldehyde; and a compound which is prepared by etherifying the condensate with an alcohol. The blocked isocyanates can be prepared by reacting polyisocyanates with active hydrogen-containing compounds. Typical examples of the polyisocyanates are tolylene diisocyanate, xylylene diisocyanate, isophorone diisocyanate, hexamethylene diisocyante and the like. Typical examples of the active hydrogen containing compounds are alcohols, phenols, oximes and the like. The crosslinking agent can be present in the coating composition of the present invention in an amount of not more than 40 % by weight based on the solid content.

The aqueous coating composition may contain organic solvents to asist solubility or dispersibility into water or to obtain smooth appearance. The organic solvents can be either hydrophobic or hydrophilic, and include alcohols, such as methyl alcohol, ethyl alcohol, isopropyl alcohol, butyl alcohol, hexyl alcohol and the like; ethyleneglycol monoalkyl ethers, such as ethyleneglycol monomethyl ether, ethyleneglycol monoethylether ethyleneglycol monobutyl ether, ethyleneglycol monoisopropyl ether and the like; hydrocarbons, such as xylene, toluene and the like; ketones, such as methyl ethyl ketone, methyl isobutyl ketone, isophorone and the like; etc.

If necessary, the aqueous coating composition may further contain pigments and additives, such as surfactants, curing promotors and defoamers. Typical non-limiting examples of the pigments are color pigments, such as carbon black, titanium oxide, iron oxide, cyanine blue, Cinquacia red etc.; extender pigments, such as calcium carbonate, aluminum silicate, balium sulfate etc.; and corrosion preventive pigments, such as strontium chromate, basic lead silicate etc.

Also, the coating composition may contain wearing resistant agents, such as quarts powder, graphite carbon, molybdenum disulfide and the like.

When the aqueous coating composition of the present invention is applied for electrocoating, a coating process is known to the art. Generally, it is conducted at a bath temperature of 15 to 35 °C, a solid content

3

of 3 to 25 % by weight and a voltage of 30 to 350 V. An article to be electrocoated may be metal, such as iron, copper, aluminum, zinc and an alloy; or an electroconductive organic material. The aqueous coating composition of the present invention is very suitable for coating pistons for compressors.

The aqueous coating composition provides coated film having excellent weathering resistance, corrosion resistance and wear resistance. It is believed that such superior technical effects can be rialized from a combination of the basic resin with the fluorine-containing polymer.

EXAMPLES

The present invention is illustrated by the following Examples, which are not be construed as limiting the present invention to their details.

Production Example 1

A four neck flask equipped with a thermometer, a stirrer, a nitrogen introducing tube, a decanter and a condenser was charged with 155 parts by weight of diethylenetriamine and 450 parts by weight of methyl isobutyl ketone. It was reacted with stirring at 100 to 150 °C for 5 hours to a ketimine (A) having an amine equivalent of 367 which was calculated in terms of secondary amine groups.

Production Example 2

A four neck flask equipped with a thermometer, a stirrer and a condenser was charged with 511 parts by weight of isophorone diisocyanate, 1.1 part by weight of dibutyl bis(lauroyloxy) stannan and 15 parts by weight of methyl isobutyl ketone and mixed. Then, 271 parts by weight of ethyleneglycol monobutyl ether was added dropwise with stirring at 40 °C for 4 hours to obtain a half blocked isocyanate.

Next, 103 parts by weight of 2-ethyl-2-hydroxymethyl-1,3-propane diol was fused at 70 °C and added to the half blocked isocyanate. The mixture was reacted at 130 °C for two hours and diluted with 364 parts by weight of ethyleneglycol monoethyle ether to obtain a blocked isocyanate (B) having a non-volatile content of 70 % by weight.

Production Example 3

A four neck flask equipped with a thermometer, a stirrer, a nitrogen introducing tube and a condenser was charged with 1,078 parts by weight of an epoxy resin (available from Toto Kasei Company as YD-011), 69 parts by weight of xylene, 292 parts by weight of polycaprolactone diol (available from UCC as PCP-0200) and 2.4 parts by weight of dimethylbenzylamine, and reacted at 140 °C for three hours with mixing in a nitrogen atmosphere to obtain a modified epoxy resin (C).

Next, the obtained modified epoxy resin (C) was diluted with 286 parts by weight of ethyleneglycol monoethyl ether. After cooling to 110 °C, 90 parts by weight of diethanolamine and 80 parts by weight of the ketimine (A) obtained in Production Example 1 were added and then reacted at 115 °C for one hour to obtain an amine-modified epoxy resin solution (D) having a non-volatile contant of 80 % by wight and an amine equivalent of 100 mmol/100g solid content.

Production Example 4

An autoclave was charged with 1,000 parts by weight of an epoxidized polybutadiene (available from Nippon Petrochemical Co. Ltd. as Nisseki Polybutadiene E-1800-6,5), 402 parts by weight of ethyleneglycol monobutyl ether, 32 parts by weight of dimethylamine and 85 parts by weight of N-methylethanolamine, and reacted at 150 °C for five hours. After removing unreacted amines, the mixture was cooled to 120 °C, to which 105 parts by weight of acrylic acid and 8 parts by weight of hydroquinone were added and reacted at 120 °C for four hours to obtain an amine-modified polybutadiene resin solution (E) having an amine equivalent of 147 mmol/100 g solid content, an acid value of 8 mmol/100g solid content and a non-volatile content of 75 % by weight.

Production Example 5

A same four neck flask as Production Example 3 was charged with 523 parts by weight of an epoxy resin (available from Toto Kasei Company as YD-014) and 363 parts by weight of ethyleneglycol monobutyl ether, and kept at 120 °C for one hour to obtain a varnish. After the varnish was cooled to 90 °C, 140 parts by weight of a solution, in which 46 parts by weight of dimethylethanol amine, 47 parts by weight of lactic acid and 47 parts by weight of deionized water were mixed, was added to the varnish and reacted at 95 °C for two hours to obtain a quaternary ammonium group-containing epoxy resin solution having a non-volatile content of 60 % by weight. The resin solution was diluted with deionized water to obtain a aqueous dispersion (F) having a non-volatile content of 15 % by weight.

Production Example 6

To 600 parts by weight of the aqueous dispersion (F) of Production Example 5 was added 150 parts by weight of polyvinylidene fluoride resin powder (available from Penwalt Company as Kynar 500) and mixed to obtain a polyvinylidene fluoride resin powder aqueous solution (G) having a non-volatile content of 32 % by weight.

Production Example 7

An aqueous dispersion (H) of polyethylene tetrafluoride resin powder was prepared as generally described in Production Example 6, with the exception that polyethylene tetrafluoride resin powder (available from Daikin Industries, Ltd. as Lubron L-2) was employed instead of polyvinylidene fluoride resin powder. The aqueous dispersion has a non-volatile content of 32 % by weight.

Production Example 8

A same four neck flask as Production Example 1 was charged with 758 parts by weight of the modified epoxy resin (C), 320 parts by weight of butyldiglycol acetate and 174 parts by weight of dehydrated castor oil, and reacted at 140 °C four hours. Then, 180 parts by weight of tetrahydrophthalic anhydride was added and reacted at 140 °C for two hours to obtain an acidic epoxy resin solution (I) having an acid value of 112 mmol/100 g solid content and a non-volatile content of 75 % by wight.

Example 1

A mixture was prepared by mixing 500 parts by weight of the amine-modified epoxy resin solution (D), 143 parts by weight of the blocked isocyanate (B) and 9.8 parts by weight of acetic acid at 90 °C for one hour. The mixture was diluted with deionized water in an amount sufficient to have a nov-volatile content of 30 % by weight to obtain a uniform aqueous dispersion. 467 parts by weight of the obtained aqueous dispersion was then mixed with 292 parts by weight of the aqueous disspersion (G) containing polyvinylidene fluoride to obtain an aqueous coating composition of the present invention. The composition was diluted with deionized water up to a non-volatile content of 15 % by weight. A steel panel which has already pretreated with zinc phosphate was served as a cathode in the diluted coating composition of the present invention and was electrocoated at 28 °C at 200 volt for 3 minutes. The coated panel was rinsed with water and baked at 200 °C for 30 minutes to obtain a uniform film having a thickness of 30 μ.

The weathering resistance and corrosion resistance of the cured film was evaluated and their results are shown in Table 1.

Example 2

An aqueous coating composition of the present invention was prepared as generally described in Example 1, with the exception that the aqueous dispersion (H) containing polyethylene tetrafluoride resin powder was emplyed instead of the aqueous dispersion (G). The composition was diluted with deionized water up to a non-volatile content of 15 % by weight. A steel panel which has already pretreated with zinc phosphate was served as a cathode in the diluted coating composition of the present invention and was electrocoated at 28 °C at 200 volt for 3 minutes. The coated panel was rinsed with water and baked at 200 °C for 30 minutes to obtain a uniform film having a thickness of 35 μ. The weathering resistance and corrosion resistance of the cured film was evaluated and their results are shown in Table 1.

An aluminum piston made of aluminum alloy was employed as a cathode and electrocoated in the coating composition of the present invention at 28 °C at 170 volt for three minutes. The coated piston was rinsed with water and baked at 200 °C for 30 minutes to obtain a cured film having a thickness of 33 μ. The film was very excellent in wear resistance.

Example 3

A mixture was prepared by mixing 500 parts by weight of the amine-modified epoxy resin solution (D), 154 parts by weight of an acrylic fluorine resin (available from Asahi Glass Co., Ltd. as Lumiflon LF-300, 150 parts by weight of a melamine resin (available from Mitsui Cyanamide Company as Cymel 1130-235J) and 16 parts by weight of lactic acid at 90 °C for one hour. The mixture was diluted with deionized water in an amount sufficient to have a nov-volatile content of 30 % by weight to obtain a coating composition of the present invention. The composition was diluted with deionized water up to a non-volatile content of 10 % by weight. A steel panel which has already pretreated with zinc phosphate was served as a cathode in the diluted coating composition of the present invention and was electrocoated at 27 °C at 170 volt for 3 minutes. The coated panel was rinsed with water and baked at 220 °C for 30 minutes to obtain a uniform film having a thickness of 29 μ.

The weathering resistance and corrosion resistance of the cured film was evaluated and their results are shown in Table 1.

Example 4

A mixture was prepared by mixing 500 parts by weight of the amine-modified epoxy resin solution (D), 143 parts by weight of blocked isocyanate (B), 154 parts by weight of an acrylic fluorine resin employed in Example 3 and 72 parts by weight of 50 % lactic acid at 90 °C for one hour. The mixture was diluted with deionized water up to a non-volatile content of 50 % by weight. The diluted mixture was diluted with a 1/1/1 wt ratio mixture of ethyleneglycol monobutyl ether/xylene/isopropyl alcohol so that a viscosity of the compostion was 28 seconds with an NK-2 cup available from Iwata Coating Machine Company to obtain an aqueous coating composition of the present invention. The aqueous coating composition was defoamed and a steel panel which has already pretreated with zinc phosphate was immersion coated in it. The coated panel was dried at 80 °C for 40 minutes and baked at 200 °C for 30 minutes to obtain a uniform film having a thickness of 23 μ.

The weathering resistance and corrosion resistance of the cured film was evaluated and their results are shown in Table 1.

Example 5

A mixture was prepared by mixing 500 parts by weight of the amine-modified polybutadiene solution (E), 0.79 parts by weight of cobalt acetate, 0.84 parts by weight of manganese acetate and 9.8 parts by weight of acetic acid at 90 °C for one hour. The mixture was diluted with deionized water up to a nov-volatile content of 30 % by weight to obtain a uniform aqueous dispersion. Then, 400 parts by weight of the obtained aqueous dispersion was then mixed with 340 parts by weight of the aqueous disspersion (H) containing polyvinyl tetrafluoride to obtain an aqueous coating composition of the present invention. The composition was diluted with deionized water up to a non-volatile content of 10 % by weight. A steel panel which has already pretreated with zinc phosphate was served as a cathode in the diluted coating composition of the present invention and was electrocoated at 26 °C at 150 volt for two minutes. The coated panel was rinsed with water and baked at 190 °C for 30 minutes to obtain a uniform film having a thickness of 27 μ.

The weathering resistance and corrosion resistance of the cured film was evaluated and their results are shown in Table 1.

Example 6

An aqueous coating composition of the present invention was prepared by mixing at 80 °C for one hour 600 parts by weight of the amine-modified polybutadiene (E), 230 parts by weight of the acrylic fluorine resin employed in Example 3, 150 parts by weight of melamine resin, one part by weight of cobalt acetate, one part by weight of manganese acetate and 18 parts by weight of acetic acid, followed by diluting with deionized water up to a non-volatile content of 25 % by weight. The composition was further diluted with deionized water up to a non-volatile content of 10 % by weight. A steel panel which has already pretreated with zinc phosphate was served as a cathode in the diluted coating composition of the present invention and was electrocoated at 26 °C at 140 volt for two minutes. The coated panel was rinsed with water and baked at 190 °C for 30 minutes to obtain a uniform film having a thickness of 28 μ. The weathering and corrosion resistance of the cured film was evaluated and their results are shown in Table 1.

Comparative Example 1

A same four neck flask as Example 3 was charged with 720 parts by weight of Nisseki Polybutadiene E 1,800-6.5, 257 parts by weight of ethyleneglycol monobutyl ether, 30 parts by weight of N-methylethanolamine and 294 parts by weight of the ketimine (A), and reacted with stirring at 150 °C for 7 hours in a nitrogen atomosphere. After cooling it to 120 °C, 5 parts by weight of hydroquinone and 43 parts by weight of acrylic acid were added and reacted at 120 °C for four hours to obtain an amine-modified polybutadiene (J) having an amine value of 277 mmol/100 g solid content, an acid value of 5 mmol/100 g solid content and a non-volatile content of 75 % by weight.

A mixture was prepared by mixing 500 parts by weight of the amine-modified polybutadiene resin solution (J), 0.79 parts by weight of cobalt acetate, 0.84 parts by weight of manganese acetate and 24 parts by weight of acetic acid at 90 °C for one hour. The mixture was diluted with deionized water up to a nov-volatile content of 15 % by weight to obtain a uniform aqueous dispersion. 1,000 parts by weight of the obtained aqueous dispersion was then mixed with 425 parts by weight of the aqueous dispersion (H) containing polyvinyl tetrafluoride to obtain an aqueous coating composition of the present invention. The composition was diluted with deionized water up to a non-volatile content of 15 % by weight. A steel panel which has already pretreated with zinc phosphate was served as a cathode in the diluted coating composition of the present invention and was electrocoated at 26 °C at 120 volt for 3 minutes. The coated panel was rinsed with water and baked at 190 °C for 30 minutes to obtain a uniform film having a thickness of 19 μ. The weathering and corrosion resistance of the cured film were evaluated and their results are shown in Table 1.

Comparative Example 2

A mixture was prepared by mixing 533 parts by weight of the acidic epoxy resin solution (I) of Production Example 8 and 150 parts by weight of the melamine employed in Example 3 at 60 °C for 30 minutes, followed by adding 32 parts by weight of N,N'-dimethylamino ethanol. The mixture was diluted with deionized water up to a nov-volatile content of 10 % by weight to obtain a uniform aqueous dispersion.

Next, 1,000 parts by weight of the aqueous dispersion employed in Example 2 containing polyethylene tetrafluoride resin powder which has a non-volatile content of 10 % by weight with a 1/4 mixture of ethyleneglycol monobutyl ether/deionized water was added to it to obtain an anionic electrocoating composition. A steel panel which has already pretreated with zinc phosphate was served as a cathode in the diluted coating composition of the present invention and was electrocoated at 30 °C at 160 volt for 3 minutes. The coated panel was rinsed with water and baked at 190 °C for 30 minutes to obtain a uniform film having a thickness of 28 μ. The weathering and corrosion resistance of the cured film were evaluated and their results are shown in Table 1.

Table 1

| | Examples | | | | | | Comparative Examples | |
|---|---|---|---|---|---|---|---|---|
| | 1 | 2 | 3 | 4 | 5 | 6 | 1 | 2 |
| Water dispersible resin | Basic resin (D) | | | | Basic Resin (E) | | Basic Resin (J) | Acidic Resin (I) |
| Basic groups content (mmol/100g solid. content) | 100 | | | | 147 | | 277 | 0 |
| Fluorine-containing polymer | PVF | PTF | AF | | PTF | AF | PTF | |
| Weathering and corrosion resistance | 70 | 70 | 80 | 72 | 63 | 72 | 15 | 24 |
| PVF: Polyvinyliene fluoride | | | | | | | | |
| PTF: Polyethylene tetrafluoride | | | | | | | | |
| AF: Acrylic fluorine resin | | | | | | | | |

* Weathering and corrosion resistance is combined properties, expressed as (an evaluation of weathering resistance)×(an evaluation of corrosion resistance). The weathering resistance is evaluated by a sunshine weather-O meter (available from Suga Test Machine Company) with gloss retention after 300 hours:

| 10 points | Not less than 91 % |
|---|---|
| 9 | 81 to 90 % |
| 8 | 71 to 80 |
| 7 | 61 to 70 |
| 6 | 51 to 60 |
| 5 | 41 to 50 |
| 4 | 31 to 40 |
| 3 | 21 to 30 |
| 2 | 11 to 20 |
| 1 | Not more than 10 |

The corrosion resistance was conducted by cross-cutting a coated film after 500 hours salt spray test and attaching a tape, followed by peering off. The evaluation is as follow:

| 10 points | Less than 1 |
|---|---|
| 9 | 1 to 1.5 mm |
| 8 | 1.6 to 2.0 |
| 7 | 2.1 to 2.5 |
| 6 | 2.6 to 3.0 |
| 5 | 3.1 to 3.5 |
| 4 | 3.6 to 4.0 |
| 3 | 4.1 to 4.5 |
| 2 | 4.6 to 5.0 |
| 1 | Not less than 5.1 mm |

## Claims

1. An aqueous coating composition comprising a basic resin having basic groups in an amount of 20 to 250 mmol based on 100 g of a solid content and a fluorine containing polymer.

2. The aqueous coating composition according to Claim 1 wherein said basic resin is an amine-modified epoxy resin or an amine-modified polybutadiene.

3. The aqueous coating composition according to Claim 1 wherein said basic groups are selected from the group consisting of amino groups, quaternary ammonium groups, sulfonium groups, quaternary phosphonium groups, Mannich groups, iminoamine groups or oxazoline rings.

4. The aqueous coating composition according to Claim 1 wherein said fluorine containing polymer is polyvinylidene fluoride resin or polyethylene tetrafluoride resin.

5. The aqueous coating composition according to Claim 1 wherein said fluorine-containing polymer is present in an amount of 2 to 900 parts by weight based on 100 parts by weight of said basic resin.

6. A method for electrocoating an article in said aqueous coating composition according to Claim 1.

7. An article coated by the method according to Claim 6.

8. The article according to Claim 7 being a piston.

# EUROPEAN SEARCH REPORT

Application Number

EP 89 10 1960

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 300 110 (E.I. DU PONT DE NEMOURS)<br>* Claims 1,22; page 10, example 6; page 11, example 8; page 6, lines 26-32 * | 1-7 | C 09 D 3/58<br>C 09 D 3/78<br>C 09 D 5/44 |
| X | US-A-4 335 030 (CONCANNON)<br>* Claims 1,26; example 2; column 6, lines 23-25; column 4, lines 56-62 * | 1,2,4-7 | |

TECHNICAL FIELDS
SEARCHED (Int. Cl.4)

C 09 D
C 08 L

The present search report has been drawn up for all claims

| Place of search | Date of completion of the search | Examiner |
|---|---|---|
| THE HAGUE | 27-04-1989 | SCHUELER D.H.H. |